# EUROPÄISCHE PATENTSCHRIFT

(11) **EP 1 562 725 B1**
(45) Veröffentlichungstag und Bekanntmachung des Hinweises auf die Patenterteilung: **14.03.2007**
(21) Anmeldenummer: 02796477.4
(22) Anmeldetag: 19.12.2002
(51) Int. Cl.: B26F 3/00, C03B 33/02, B24B 9/10

(54) **VORRICHTUNG ZUM BEARBEITEN VON WERKSTOFFPLATTEN**
DEVICE FOR MACHINING MATERIAL PLATES
DISPOSITIF D'USINAGE DE PLAQUES DE MATERIAU

(30) Priorität: 22.11.2002 AT 17592002
(43) Veröffentlichungstag der Anmeldung: 17.08.2005
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred
(86) Internationale Anmeldenummer: PCT/AT2002/000360
(87) Internationale Veröffentlichungsnummer: WO 2004/048052

(56) Entgegenhaltungen:
- DE-A- 4 440 631
- GB-A- 2 181 376
- US-A- 4 685 180
- US-A1- 2001 018 313

## Beschreibung

Die Erfindung betrifft eine Vorrichtung zum Bearbeiten von Werk stoffplatten, wie Glasscheiben, mit den Merkmalen des einleitenden Teils der Werkstoffplatte und mit einer Düse, aus der ein Wasserstrahl zum Schneiden der Werkstoffplatten austritt, wobei die Düse an einer Führung parallel zur Ebene der Stützeinrichtung verfahrbar ist, und mit einem Werkzeug zum Nachbearbeiten der Schnittränder der Werkstoffplatten, das an der Führung der Düse verfahrbar ist.

Eine Vorrichtung zum Teilen von Glastafeln mit Hilfe eines Wasserstrahls ist beispielsweise aus der US 2001/018313 A1 oder aus der DE 100 51 942 A1 bekannt. Die Schnittränder der Werkstoffplatten bzw. Glasscheiben müssen anschließend bearbeitet, insbesondere geschliffen und poliert werden, wofür sie zu einer weiteren Arbeitsstation gefördert werden. In dieser weiteren Arbeitsstation müssen die Glasscheiben in Relation zum Werkzeug exakt positioniert werden, damit diese Nachbearbeitung präzise aus-geführt werden kann. Damit ist nicht nur ein hoher technischer Auf-wand, sondern auch ein Zeitverlust verbunden, da die Glasscheibe nicht nur zu einer weiteren Arbeitsstation gebracht, sondern dort auch positioniert werden muss.

Eine Vorrichtung mit dem Merkmale des einleitenden Teils von Anspruch 1 ist aus der DE 44 40 631 A1 bekannt. Das Nachbearbeiten der Schnittränder erfolgt bei der DE 44 40631 A1 mit Hilfe eines Schneidstrahles.

Der Erfindung liegt die Aufgabe zu Grunde, das NaChbearbeiten der vom Wasserstrahl erzeugten Schnittränder einfacher und schneller durchführen zu können.

Gelöst wird diese Aufgabe mit einer Vorrichtung mit den Merkmalen des Anspruches 1.

Gemäß der Erfindung ist das Werkzeug zum Bearbeiten der Schnittränder an der gleichen Führung verfahrbar, wie die Düse. Dies vereinfacht nicht nur den technischen Aufbau der Vorrichtung, sondern verkürzt auch die Bearbeitungszeit, da die Glasscheibe zur Nachbearbeitung nicht zu einer weiteren Vorrichtung transportiert werden muss. Überdies kann zur Nachbearbeitung im wesentlichen das gleiche Steuerprogramm wie für das Wasserstrahlschneiden verwendet werden.

Auch wenn es im Rahmen der Erfindung möglich ist, dass die Düse und das Werkzeug an getrennten. Schlitten auf der gemeinsamen Führung verfahrbar sind, ist es bei der Erfindung bevorzugt, wenn die Düse und das Werkzeug an einem gemeinsamen Schlitten angebracht sind, der auf der Führung verfahrbar ist. Dies vereinfacht den technischen Aufbau der Vorrichtung weiter, da für Düse und Werkzeug nur ein einziger Antrieb verwendet werden muss.

Die Erfindung kommt bevorzugt bei im wesentlichen senkrecht stehenden Stützeinrichtungen zum Einsatz, wie dies aus der DE 100 51 942 A1 an sich bekannt ist. Dementsprechend kann in einer bevorzugten Ausführungsform der Erfindung vorgesehen sein, dass die Düse auf der der Stützfläche der Stützeinrichtung gegenüberliegenden Seite angeordnet ist, und dass in der Stützwand eine Ausnehmung vorgesehen ist, hinter der eine wassergefüllte Kammer angeordnet ist, die auf einer zweiten Führung synchron zur Düse verfahrbar ist.

Es ist bei der Erfindung möglich, dass ein weiteres Werkzeug zum Bearbeiten der Schnittränder der Werkstoffplatte vorgesehen ist, das an der Führung der wassergefüllten Kammer verfahrbar ist. Dieses weitere Werkzeug kann entweder ein Bearbeiten der Glasscheibe auf der der Stützeinrichtung zugewandten Seite der Glasscheibe ermöglichen, was unter Umständen von der Vorderseite nicht möglich ist. Alternativ oder zusätzlich kann dieses weitere Werkzeug aber auch ein zweiter Werkzeugsatz sein, der zum Einsatz kommen kann, wenn das erste Werkzeug auf Grund von Verschleiß oder Bruch nicht mehr einsatzfähig ist. Dadurch lassen sich die Intervalle, in denen die Werkzeuge gewechselt werden müssen, vergrößern, wodurch auch die Stehzeit der Maschine verringert wird. Grundsätzlich ist es aber auch denkbar, dass ein Werkzeug nur an der Führung der wassergefüllten Kammer vorgesehen ist und kein Werkzeug an der Führung der Düse.

Gemäß der Erfindung kann auch das zweite Werkzeug, das an der Führung der wassergefüllten Kammer verfahrbar ist, auf einem gemeinsamen Schlitten mit der Düse angeordnet sein, der auf der Führung verfahrbar ist. Auch hier lässt sich der konstruktive Aufwand für den Antrieb vereinfachen.

Weitere vorteilhafte Ausführungsformen der Erfindung sind Gegenstand der übrigen Unteransprüche.

Nachfolgend wird ein bevorzugtes Ausführungsbeispiel der Erfindung mit Bezug auf die beiliegenden Zeichnungen näher erläutert.

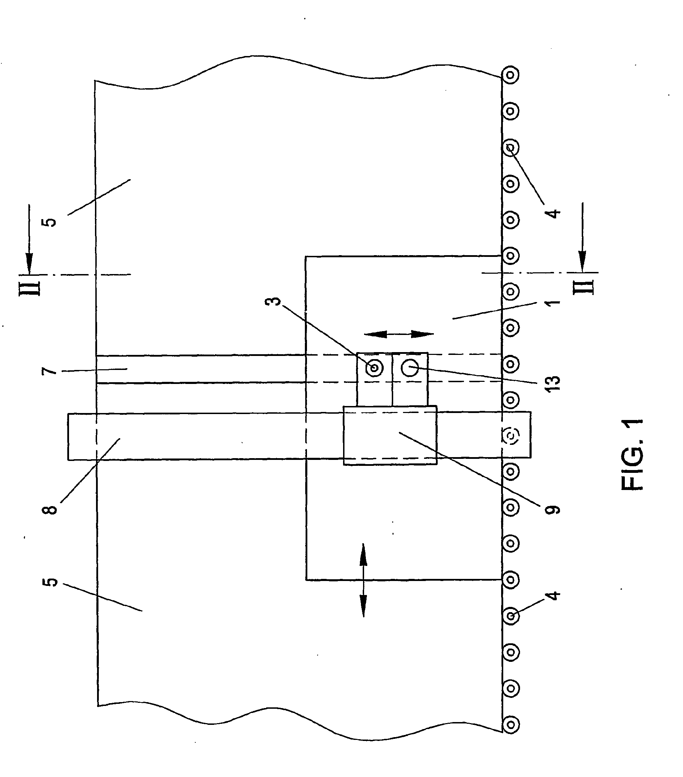

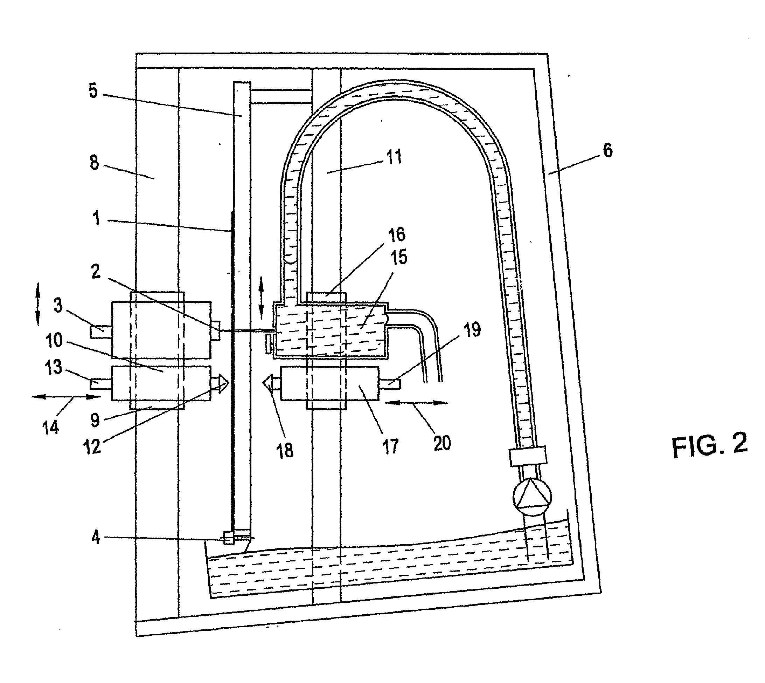

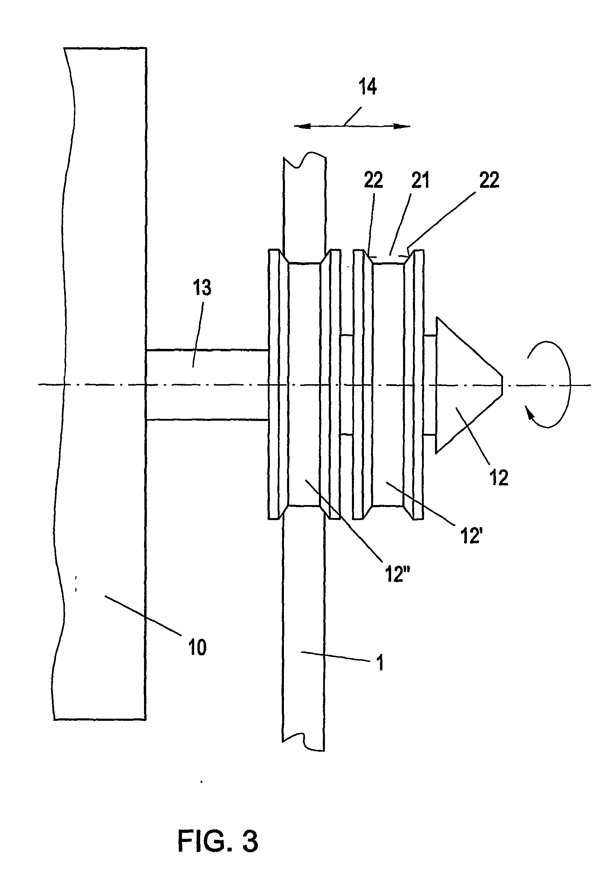

Es zeigt: Fig. 1 eine Vorderansicht einer erfindungsgemäßen Vorrichtung, Fig. 2 einen Schnitt durch die Vorrichtung von Fig. 1 entlang der Linie II-II und Fig. 3 eine schematische Detailansicht eines Werkzeuges, das bei der erfindungsgemäßen Vorrichtung zum Einsatz kommen kann.

In Fig. 1 ist eine Vorrichtung gemäß der Erfindung dargestellt, in der eine Werkstoffplatte, z.B. eine Glasscheibe 1, etwa senkrecht stehend an einer Stützeinrichtung bzw. Stützwand 5 anliegt. Die Stützwand 5 ist an einem Maschinengestell 6 angeordnet. Die Glasscheibe 1 steht auf einem Horizontalförderer auf, der im dargestellten Ausführungsbeispiel durch Transportrollen 4 gebildet wird. Derartige Stützeinrichtungen 5 sind als Rollenfelder, Walzenfelder oder Luftkissenwände, insbesondere als Teil von Isolierglasfertigungsanlagen, im Stand der Technik bekannt. Gleiches gilt für verschiedenste Ausführungsformen von Horizontalförderern.

Die Stützeinrichtung bzw. Stützwand 5 ist durch eine Ausnehmung in Form eines vertikal verlaufenden Schlitzes 7 unterbrochen. Im Bereich vor bzw. unmittelbar neben dem Schlitz 7 sind vor und hinter der Stützwand vertikal ausgerichtete Führungen 8 und 11 angeordnet. Auf der vor der Stützwand 5, das heißt auf Seite der Stützwand 5, an der die Glasscheibe 1 anliegt, angeordneten Führung 8 ist eine Düse 2 verfahrbar, die über einen Anschluss 3 mit Wasser unter hohem Druck, dem abrasive Partikel beigemischt sein können, aus einer an sich bekannten und daher nicht dargestellten und beschriebenen Hochdruckpumpe versorgt wird. Durch aufeinanderfolgendes oder gleichzeitiges Verfahren der Düse 2 an der Führung 8 und Verfahren der Glasscheibe 1 entlang des Horizontalförderers 4 können durch den Wasserstrahl beliebig gestaltete Schnitte an der Scheibe 1 hergestellt werden.

Die Düse 2 ist an einem Schlitten 9 auf der Führung 8 verfahrbar. Auf diesem Schlitten 9 befindet sich des weiteren ein Antrieb 10 für ein Werkzeug 12, das im in Fig. 2 dargestellten Ausführungsbeispiel ein Schleifkegel ist. Das Werkzeug 12 ist an einer Werkzeugspindel 13 befestigt, die entlang des Doppelpfeiles 14 vor und zurück verstellbar ist. Mit Hilfe des Werkzeuges 12 können mit Hilfe der Düse 2 bzw. des Wasserstrahles hergestellte, beispielsweise runde Ausnehmungen angesenkt werden. Anstelle eines Schleifkegels können aber auch Schleifscheiben oder Polierscheiben zum Nachbearbeiten der Schnittränder auf der Werkzeugspindel 13 befestigt sein.

Auf der an der Rückseite der Stützwand 5 angeordneten Führung ist eine wassergefüllte Kammer 15 angeordnet, in welche der Wasserstrahl eintritt, um eine unerwünschte Sprühnebelbildung, Reflexion des Wasserstrahls mit den abrasiven Teilchen auf die Rückseite der Glasscheibe 1 sowie eine unerwünschte Lärmentwicklung zu vermeiden. Die wassergefüllte Kammer 15 ist auf einem Schlitten 16 synchron zur Düse 2 auf und ab verfahrbar. Am Schlitten 16 ist des weiteren ein zweiter Antrieb 17 für ein zweites Werkzeug 18 befestigt, wobei das Werkzeug 18 wiederum an einer Spindel 19 in Richtung des Doppelpfeiles 20 vor und zurück verstellbar ist. Mit dem Werkzeug 18 können ebenso wie mit dem Werkzeug 12 von der Rückseite zum Beispiel Öffnungen angesenkt oder beliebig verlaufende Kanten geschliffen werden. An Stelle des Schleifkegels 18 können wiederum z.B. Schleifscheiben oder Polierscheiben eingesetzt werden. Grundsätzlich ist es möglich, dass entweder nur das Werkzeug 12 oder nur das Werkzeug 18 oder zwei Werkzeuge 12 und 18 vorgesehen sind.

Auch wenn es im Rahmen der Erfindung möglich ist, dass die Kammer 15 und das Werkzeug 18 an getrennten Schlitten auf der gemeinsamen Führung 11 verfahrbar sind, ist es auch hier bei der Erfindung bevorzugt, wenn die Kammer 15 und das Werkzeug 18 an einem gemeinsamen Schlitten 16 angebracht sind, der auf der Führung 11 verfahrbar ist.

Da die Werkzeuge 12 und 18 direkt auf den Schlitten 9 und 16 der Düse 2 bzw. der Kammer 15 befestigt sind, ist für die Werkzeuge 12 und 18 kein eigener translatorischer Antrieb erforderlich. Des weiteren ist' es relativ einfach, die Bewegungssteuerung der Düse 2 und der Kammer 15 sowie des Horizontalförderers 4 nach entsprechender Koordinatenkorrektur zur Bewegungssteuerung der Werkzeuge 12 und 18 heranzuziehen.

Der Arbeitsablauf kann beispielsweise dergestalt erfolgen, dass durch gleichzeitiges Bewegen der Düse 2 und der Kammer 15 mit dem Horizontalförderer 4 eine kreisrunde Öffnung aus der Glasscheibe 1 ausgeschnitten wird. Während dieses Arbeitsvorganges befinden sich die Werkzeuge 12 und 18 in ihrer zurückgezogenen und somit von der Glasscheibe 1 entfernten Stellung. Nach Beendigung des Schnittes werden die Schlitten 9 und 16 im wesentlichen um den Achsabstand der Düse 2 und der Spindel 12 bzw. 18 nach oben gefahren und nacheinander die Schleifkegel 12 und 18 so weit zur Glasscheibe 1 verfahren, bis die Schnittkanten im gewünschten Ausmaß an beiden Seiten gebrochen bzw. angesenkt wurden. Soferne die Öffnung größer als der größte Arbeitsdurchmesser der Schleifkegel 12 und 18 ist, muss die Kontur des Schnittrandes durch entsprechend koordiniertes gleichzeitiges Verfahren der Schlitten 9 bzw. 16 und des Horizontalförderers 4 nachgefahren werden.

In Fig. 3 ist der Antrieb 10 teilweise noch einmal in vergrößertem Maßstab dargestellt und zwar mit einem Werkzeug, das aus einer Kombination aus einem Schleifkegel 12, einer Schleifscheibe 12' und einer Polierscheibe 12" besteht. Dadurch ist es möglich, mit einem Kombinationswerkzeug verschiedene Arbeiten auszuführen. Das Werkzeug 18, das hinter der Stützwand 5 angeordnet ist, kann entsprechend ausgeführt sein.

Da die Schleifscheibe 12' eine Vertiefung 21 mit schräggestellten Flanken 22 aufweist, können mit der Schleifscheibe 12' die Schnittränder sowohl stirnseitig geschliffen als auch an ihren Kanten angefast werden. Da aber eine Schleifscheibe 12' auf Grund ihrer Breite nur im wesentlichen für eine bestimmte Stärke von Glasplatten 1 geeignet ist, kann durch entsprechendes Schrägstellen der Schleifscheibe 12' gegenüber der Glasscheibe 1 eine Anpassung an die Stärke der Glasscheibe durchgeführt werden. Um dies zu erreichen, kann bei der erfindungsgemäßen Vorrichtung des weiteren noch vorgesehen sein, dass der Antrieb 10 durch entsprechende Antriebe zur Ebene der Glasscheibe 1 schräggestellt werden kann. Grundsätzlich ist es auch möglich, z.B. an der Vorderseite eine Schleifscheibe 12' mit einer größeren Breite, also für stärkere Glastafeln vorzusehen, und am zweiten bzw. hinteren Antrieb 17 eine Schleifscheibe mit einer geringeren Breite für Glastafeln, die eine geringere Dicke aufweisen.

## Patentansprüche

1. Vorrichtung zum Bearbeiten von Werkstoffplatten (1), wie Glasscheiben, mit einer Stützeinrichtung (5) für die Werkstoffplatte (1), mit einer Düse (2), aus der ein Wasserstrahl zum Schneiden der Werkstoffplatten (1) austritt, wobei die Düse (2) an einer Führung (8) parallel zur Ebene der Stützeinrichtung (5) verfahrbar ist, und mit einem Werkzeug (12) zum Nachbearbeiten der Schnittränder der werkstoffplatten (1), das an der Führung (8) der Düse (2) verfahrbar ist, **dadurch gekennzeichnet, dass** das Werkzeug einen Schleifkegel (12) und/oder eine Schleifscheibe (12') und/oder eine Polierscheibe (12") aufweist.

2. Vorrichtung nach Anspruch 1, **dadurch gekennzeichnet, dass** die Düse (2) und das Werkzeug (12) an einem gemeinsamen Schlitten (9) angebracht sind, der auf der Führung (8) verfahrbar ist.

3. vorrichtung nach Anspruch 1, **dadurch gekennzeichnet, dass** die Düse (2) und das Werkzeug (12) an getrennten Schlitten auf der Führung (8) verfahrbar sind.

4. Vorrichtung nach einem der Ansprüche 1 bis 3, **dadurch gekennzeichnet, dass** die Ebene der Stützeinrichtung (5) geringfügig, vorzugsweise zwischen drei und acht Grad, gegenüber der Vertikalen geneigt ist.

5. Vorrichtung nach einem der Ansprüche 1 bis 4, **dadurch gekennzeichnet, dass** die Düse (2) auf der der Stützfläche der Stützeinrichtung (5) gegenüberliegenden Seite angeordnet ist, und dass in der Stützwand (5) eine Ausnehmung (7) vorgesehen ist, hinter der eine wassergefüllte Kammer (15) angeordnet ist, die auf einer zweiten Führung (11) synchron zur Düse (2) verfahrbar ist.

6. Vorrichtung nach Anspruch 5, **dadurch gekennzeichnet, dass** ein weiteres Werkzeug (18) zum Bearbeiten der Schnittränder der Werkstoffplatte (1) vorgesehen ist, das an der Führung (11) der wassergefüllten Kammer (15) verfahrbar ist.

7. Vorrichtung nach Anspruch 6, **dadurch gekennzeichnet, dass** die wassergefüllte Kammer (15) und das Werkzeug (18) auf einem gemeinsamen Schlitten (16) angeordnet sind, der auf der Führung (11) verfahrbar ist.

8. Vorrichtung nach Anspruch 6, **dadurch gekennzeichnet, dass** die Kammer (15) und das Werkzeug (18) an getrennten Schlitten auf der Führung (11) verfahrbar sind.

9. Vorrichtung nach einem der Ansprüche 1 bis 7, **dadurch gekennzeichnet, dass** das Werkzeug (12,18) auf einer Werkzeugspindel (13,19) befestigt ist, die in Richtung ihrer Drehachse verschiebbar ist.

10. Vorrichtung nach einem der Ansprüche 1 bis 8, **dadurch gekennzeichnet, dass** das Werkzeug (12,18) um eine Achse verschwenkbar ist, die parallel zur Ebene der Stützeinrichtung (5) ausgerichtet ist.

## Claims

1. Device for working of material plates (1), such as glass panes, with a support means (5) for the material plate (1) and with a nozzle (2) from which a water jet emerges for cutting the material plates (1), which nozzle (2) can be moved on a guide (8) parallel to the plane of the support means (5), and with a tool (12) for working of the cut edges of the material plates (1), which tool can be moved on the guide (8) of the nozzle (2), **characterized in that** the tool has a grinding cone (12) and/or a grinding wheel (12') and/or a polishing wheel (12").

2. Device according to claim 1, **characterized in that** the nozzle and the tool (12) are mounted on a common carriage (9) which can be moved on the guide (8).

3. Device according to claim 1, **characterized in that** the nozzle (2) and the tool (12) can be moved on separate carriages on the guide (8).

4. Device according to one of claims 1 to 3, **characterized in that** the plane of the support means (5) is tilted slightly, preferably between three and eight degrees, relative to vertical.

5. Device according to one of claims 1 to 4, **characterized in that** the nozzle (2) is located on the side opposite the supporting surface of the support means (5) and wherein in the support wall (5) there is a cutout (7) behind which there is a water-filled chamber (15) which can be moved on a second guide (11) synchronously to the nozzle (2).

6. Device according to claim 5, **characterized in that** there is a further tool (18) for working the cut edges of the material plate (1), which tool can be moved on the guide (11) of the water-filled chamber (15).

7. Device according to claim 6, **characterized in that** the water-filled chamber (15) and the tool (18) are located on a common carriage (16) which can be moved on the guide (11).

8. Device according to claim 6, **characterized in that** the chamber (15) and the tool (18) can be moved on separate carriages on the guide (11) .

9. Device according to claim 7, **characterized in that** the tool (12, 18) is mounted on a tool spindle (13, 19) which can be moved in the direction of its axis of rotation.

10. Device according to claim 8, **characterized in that** the tool (12, 18) can be swivelled around an axis which is parallel to the plane of the support means (5).

## Revendications

1. Dispositif d'usinage de plaques de matériau (1), comme des vitres, avec un support (5) pour la plaque de matériau (1) avec une buse (2) d'où sort un jet d'eau pour couper les plaques de matériau (1), sachant que la buse (2) est déplaçable sur une glissière (8) parallèlement au plan du support (5) et avec un outil (12) pour le ré-usinage des bords de coupe des plaques de matériau (1), qui est déplaçable sur la glissière (8) de la buse (2), **caractérisé en ce que** l'outil comporte un cône de meulage (12) et/ou un disque de ponçage (12') et/ou un disque à polir (12").

2. Dispositif selon la revendication 1, **caractérisé en ce que** la buse (2) et l'outil (12) sont installés dans un chariot commun (9) qui est déplaçable sur la glissière (8).

3. Dispositif selon la revendication 1, **caractérisé en ce que** la buse (2) et l'outil (12) sont déplaçables sur la glissière (8) en chariots séparés.

4. Dispositif selon l'une quelconque des revendications 1 à 3, **caractérisé en ce que** le plan du support (5) est légèrement incliné par rapport à la verticale, de préférence entre trois et huit degrés.

5. Dispositif selon l'une quelconque des revendications 1 à 4, **caractérisé en ce que** la buse (2) est disposée sur le côté opposé à la surface d'appui du support (5) et **en ce que** dans la paroi d'appui (5) une cavité (7) est prévue, derrière laquelle est disposée une chambre remplie d'eau (15) qui est déplaçable sur une deuxième glissière (11) en synchronisation avec la buse (2).

6. Dispositif selon la revendication 5, **caractérisée en ce qu'**un autre outil (18) est prévu pour l'usinage des bords de coupe de la plaque de matériau (1), qui est déplaçable sur la glissière (11) de la chambre remplie d'eau (15).

7. Dispositif selon la revendication 6, **caractérisé en ce que** la chambre remplie d'eau (15) et l'outil (18) sont disposées sur un chariot commun (16) qui est déplaçable sur la glissière (11).

8. Dispositif selon la revendication 6, **caractérisé en ce que** la chambre (15) et l'outil (18) sont déplaçables sur la glissière (11) en chariots séparés.

9. Dispositif selon l'une quelconque des revendications 1 à 7, **caractérisé en ce que** l'outil (12, 18) est fixé sur une broche d'outil (13, 19) qui peut être déplacée en direction de son axe de rotation.

10. Dispositif selon l'une quelconque des revendications 1 à 8, **caractérisé en ce que** l'outil (12, 18) est orientable autour d'un axe, qui est orienté parallèlement au plan du support (5).
